# EUROPÄISCHE PATENTSCHRIFT

(11) **EP 0 970 275 B1**
(45) Veröffentlichungstag und Bekanntmachung des Hinweises auf die Patenterteilung: **19.03.2003**
(21) Anmeldenummer: 98910905.3
(22) Anmeldetag: 20.03.1998
(51) Int. Cl.: D21C 11/00, C08H 5/02

(54) **VERFAHREN ZUR AUFBEREITUNG VON AROMATISCHE POLYMERE ENTHALTENDEN ALKALISCHEN LÖSUNGEN**
METHOD FOR PREPARING ALKALINE SOLUTIONS CONTAINING AROMATIC POLYMERS
PROCEDE DE TRAITEMENT DE SOLUTIONS ALCALINES CONTENANT DES POLYMERES AROMATIQUES

(30) Priorität: 20.03.1997 CH 67297
(43) Veröffentlichungstag der Anmeldung: 12.01.2000
(73) Patentinhaber: GRANIT S.A., CH-1005 Lausanne (CH)
(72) Erfinder: ABÄCHERLI, Alfred, CH-1012 Lausanne (CH); DOPPENBERG, Frank, CH-1007 Lausanne (CH)
(74) Vertreter: Haffner, Thomas M., Dr.
(86) Internationale Anmeldenummer: IB9800512
(87) Internationale Veröffentlichungsnummer: WO98042912

(56) Entgegenhaltungen:
- EP-A- 0 224 721
- EP-A- 0 364 632
- US-A- 3 984 362

## Beschreibung

Die Erfindung bezieht sich auf ein Verfahren zur Aufbereitung von durch Ansäuern ausfällbare aromatische Polymere enthaltenden alkalischen Lösungen, welches die Abtrennung dieser Polymere in fester Form und die Trocknung an Luft bei normalem Druck und unter Anwendung von Temperaturen zwischen 40° und 110°C ohne Schwarzwerden gestattet.

Die meisten aromatischen Polymere sind unter alkalischen Bedingungen leicht löslich. In bestimmten Fällen, wie bei durch alkalisches Laugen von Holz gewonnenen Ligninen, ermöglicht eine Ansäuerung die Ausfällung und Abtrennung derselben. Das dabei auftretende Problem besteht darin herauszufinden, ob das ausgefällte Produkt filtriert und getrocknet werden kann. Es fällt nämlich häufig in gelatineuser Form aus und ist dann nicht zentrifugierbar und noch weniger filtrierbar. Selbst in den Fällen, in denen eine Abtrennung durch Filtrieren oder Zentrifugieren möglich ist, tendiert das daraus resultierende Produkt dazu, beim Trocknen schwarz zu werden. Dies trifft häufig bei Ligninen zu, die chemischen Veränderungen unterzogen wurden, im Zuge derer Gruppen eingeführt werden, welche die Polarität der Moleküle erhöhen, d.h. die Wasserlöslichkeit verbessern. Es ist somit sehr schwierig ein Verfahren zu finden, mit welchem die Abtrennung von Produkten guter Qualität möglich ist und welches bei jeder Art von ausfällbaren aromatischen Polymeren funktioniert. Dazu kommen noch die Probleme in Zusammenhang mit geringen Konzentrationen (unter 15 Gew.% Polymere). Es ist häufig unmöglich, in solchen Fällen Polymere abzutrennen, auch wenn die nachfolgend beschriebenen, bekannten Verfahren für dieselben Polymere in höheren Konzentrationnen wirksam sind. In Anbetracht der erhöhten Investitionskosten und des erhöhten Energieverbrauchs bei industriellen Anlagen bietet Konzentrieren durch Eindampfen auch keine Lösung für dieses Problem. Es geht vielmehr darum, eine alternative Methode zu finden, die zuverlässig und wirtschaftlich ist.

In der Literatur findet sich eine große Anzahl an Vorschlägen zur Abtrennung dieser Art von Polymeren, insbesondere Ligninen, und zur Verbesserung der Filtrierbarkeit. Bei diesen Verfahren geht es um den Einsatz einer Mineral- oder organischen Säure zum Absenken des pH-Werts bei einer relativ hohen, optimierten Temperatur und anschließende Filtration des resultierenden Niederschlags ohne neuerliches Aufheizen (Wienhaus et al., Papier 1990 (11), S. 563-569; Binglin, Water Treatment 1988 (3), S. 445-454; Alen et al., Tappi 1979 (11), S. 108-110).

Ein Verfahren mit welchem es möglich wäre, das abgetrennte Produkt filtrierbar und trockenbar zu machen, welches dabei aber für jede Art von aromatischen Polymeren, für die es einen Ausfällungs-pH-Wert in wässerigem Medium gibt, wirksam ist, ist bisher nicht bekannt geworden.

Die Erfindung zielt nun darauf ab, die oben beschriebenen Nachteile der bekannten Verfahren zu vermeiden. Zur Lösung dieser Aufgabe wird erfindungsgemäß vorgeschlagen, daß die Lösung angesäuert und danach erhitzt und der resultierende Niederschlag als Feststoff abgetrennt wird. Diese Verfahrensweise mag widersinning erscheinen, weil bei der Kältefällung eine Mischung erzeugt wird, die äußerst zähflüssig ist und ein sehr gelatinöses Aussehen hat. Außerdem können die in dieser zähflüssigen Suspension enthaltenen ausgefällten Polymere weder durch Zentrifugieren noch durch Filtrieren noch durch andere Methoden abgetrennt werden. Die Suspension wird erst bei neuerlichem Erhitzen flüssiger und überschreitet zu einem bestimmten Zeitpunkt eine Schwelle (je nach Polymertyp um 40-80°C), bei welcher sie überraschenderweise filtrierbar wird und auch nicht zu unerwünschten Verfärbungen beim Trocknen Anlaß gibt. Die exakte Temperatur, bei welcher eine gute Filtration möglich wird, hängt stark vom jeweiligen Polymer ab und muß für jeden Fall optimal gewählt werden.

Das überraschende Element besteht darin, daß es sich hier nicht um ein wärmetechnisch umkehrbares Verfahren handelt. Es ist unbedingt notwendig, bei einer relativ kühlen Temperatur auszufällen und danach zu erwärmen. Fällt man bei einer optimalen Temperatur aus, ohne nach der Ausfällung neuerlich aufzuheizen, kann man in bestimmten Fällen zwar eine vertretbare Filtrierbarkeit erzielen, das Ergebnis liegt aber noch weit weg von jener Wirkung, die mit dem vorgeschlagenen Verfahren erreicht wird: die Filtration erfolgt weniger schnell, und in den meisten Fällen, beispielswiese bei Polymeren mit einem relativ niedrigen Ausfällungs-pH-Wert von unter 5, wird das Polymer beim Trocknen vollkommen schwarz.

Besonders gute und reproduzierbare Ergebnisse konnten hierbei dann erzielt werden, wenn die auszufällenden Polymere die Kriterien aufweisen, daß ein Maximum auf der Viskositätskurve von unter pH 8 liegt, oder ein unterer Inflexionspunkt sich auf der Titrationskurve von unter pH 6,5 befindet.

Der Hauptvorteil der Erfindung besteht darin, daß sie die Herstellung von Produkten mit sehr niedrigen Gehalten an wasserlöslichen Mineralstoffen, insbesondere Natriumsalzen und Hemicellulosen, zu sehr geringen Kosten ermöglicht. Bei der Verwendung der Produkte zum Beispiel als Copolymere bei Plastikmaterialien (Duroplasten oder Thermoplasten) ist die Reinheit ein wichtiger Faktor für die technischen Daten (mechanischen Eigenschaften, Abwesenheit von Elektrolyten, wie Natrium, für die elektrische Isolationsfähigkeit, etc.) des Endmaterials. Da das Produkt unter Verwendung beispielsweise eines Büchner-Filters oder Bandfilters leicht filtrierbar ist, können nämlich die Salze durch Waschen entfernt werden. Insbesondere im Fall von stark verdünnten Lösungen, beispielsweise Abwässern aus bestimmten Zellstofffabriken mit erhöhtem Waschwasserverbrauch, gestattet das beschriebene Verfahren die Abtrennung eines Qualitätprodukts zu einem wettbewerbsfähigen Preis, da die zum Eindampfen notwendige Energie gespart wird.

Die Filtration kann noch weiter verbessert werden, wenn das Produkt nach dem Wiederaufheizen einige Minuten lang unter mittlerem bis kräftigem und sehr gleichmäßigem Rühren reifen gelassen wird. Diese Reifezeit muß jedoch beschränkt werden. Wird sie über einen sehr langen Zeitraum ausgedehnt, beispielsweise indem die Flüssigkeit mehrere Stunden lang in warm stehen gelassen oder abkühlen gelassen wird, nimmt die Filtrationszeit wieder zu. Außerdem führt eine Abkühlung der Flüssigkeit nach der Hauptstufe des Wiederaufheizens oder gegebenenfalls nach einer zusätzlichen Reifezeit noch zu einer Erhöhung der Filtrationsgeschwindigkeit.

Als weiteren fakultativen Schritt gestattet die Erfindung eine Sedimentation des Polymers vor der Filtration. Dadurch ist eine Reduktion der zu filtrierenden Wassermenge um einen Faktor über 5, der bis über 20 hinausgehen kann, möglich. Bei der Befolgung des gesamten erfindungsgemäßen Verfahrensablaufs ist der entscheidende Faktor zur Ermöglichung der Sedimentation der pH-Wert. Ist dieser nicht ausreichend niedrig, setzt sich das Produkt nicht ab, auch wenn es filtrierfähig ist. Dieser pH-Wert liegt typischerweise mindestens einen Punkt unter dem Maximum der Viskositätskurve. Ist der pH-Wert hingegen zu niedrig, kann die Filtrationsgeschwindigkeit wieder langsamer werden.

Weitere Zusatzbehandlungen können vor oder nach der Ausfällung sowie vor oder nach dem Erhitzen durchgeführt werden: die Zugabe von Flockungsmitteln (FeCl₃, Al₂(SO₄)₃) oder von Polyelektrolyten (z.B. vom Acryltyp) sowie eine elektrolytische Ausflockbehandlung. Durch diese Maßnahmen läßt sich die Abtrennbarkeit weiter verbessern und auch die Menge an abtrennbaren Feststoffen erhöhen, da sie auch die Ausfällung von zusätzlichen Polymerfraktionen gestatten. Besonders groß ist die Wirksamkeit der Flockungshilfsmittel in den meisten Fällen, wenn sie vor der Ansäuerung und vor dem Erhitzen zugegeben werden.

Andererseits ermöglicht dieses Verfahren die Schaffung einer großen Vielfalt von neuen technischen Lösungen zur Gewinnung von Polymeren mit speziellen, an die Erfordernisse angepaßten Eigenschaften. Dank der verbesserten Abtrennung der Polymere wird es nämlich möglich, chemische Veränderungen in wässeriger alkalischer Phase vorzunehmen, ohne daß das Produkt dadurch schwieriger abzutrennen und zu reinigen wäre. Zu den Reaktionen, die bei derartigen Veränderungen stattfinden können, gehören alle jene Reaktionen, die chemische Gruppen einführen, welche die Ladungsverteilung und damit das Präzipitationsverhalten ändern: Veretherung (Methylierung, Ethylierung, Carboxymethylierung, Alkoxylierung mit Epoxy, etc.) und Veresterung (Sulfonierung, Nitrierung, Reaktionen mit organischen Säuren oder Disäuren, etc.). Genannt seien auch die chemischen Reaktionen, die neue funktionelle Gruppen durch Abbau des Polymers bilden: Oxidationen, beispielsweise mit Sauerstoff, Wasserstoffperoxid, Ozon, Oxidationssalzen, wie Periodaten oder Permanganaten, Oxoammonolyse, oxidative oder reduktive elektrochemische Reaktionen oder enzymatische Reaktionen. Diese Reaktionen können sogar die Molekulargrößenverteilung beeinflussen und insbesondere eine Verringerung der mittleren Molekulargröße, aber auch Kondensationen bewirken.

Diese Reaktionen können an Lösungen ausgeführt werden, welche aus bereits zuvor abgetrennten Polymeren hergestellt wurden, oder aber sie können direkt an Abwässern durchgeführt werden, ohne daß es notwendig wäre, das Polymer zuvor abzutrennen und wieder in Lösung zu bringen. Einige dieser Modifikationen, zum Beispiel Oxidationen, können sogar die Filtration begünstigen, wenn das erfindungsgemäße Verfahren angewendet wird, was bei bekannten Verfahren nicht der Fall ist.

Dies kann dadurch erklärt werden, daß das vorgeschlagene Verfahren umso besser wirkt, je tiefer das Maximum der Viskosität in Funktion des pH liegt oder umso tiefer der untere Inflexionspunkt auf der Titrationskurve sich befindet. Zum guten Funktionieren desselben ist eine gewisse Polarität des Polymers (Carboxyl- oder andere polare Gruppen in genügender Anzahl) unabdingbar. Zum Beispiel können gewisse schwachpolare Polymere, die schon bei pH-Werten zwischen 8 und 9 ausfallen, durch dieses Verfahren nicht ohne weiteres in eine filtrierbare Form gebracht werden. Die Natur der eingesetzten Säure kann sogar bei gleichem pH-Wert von Bedeutung sein. Polarere Säuren zeigen bessere Wirkung als unpolare und werden bei höheren pH-Werten des Inflexionspunktes bevorzugt ggf. gemeinsam mit CO₂ eingesetzt.

Diese Veränderungen gestatten auch die Beeinflussung und Steuerung der Eigenschaften der Polymere, die dann mit Hilfe des erfindungsgemäßen Verfahrens abgetrennt und in gewerblich nutzbarer Form rückgewonnen werden können. Aufgrund ihrer speziellen Eigenschaften stellen diese Polymere daher Hochleistungsprodukte zur Verwendung in Plastikmaterialien als Copolymere, Füllstoffe oder Zusatzstoffe (Antioxidantien, Herstellungshilfen, Dispergierungsmittel für Pigmente, Emulgatoren, flammwidrige Stoffe) dar. Sie können auch als oberflächenaktive Mittel (Dispergierungsmittel, Emulgatoren, grenzflächenaktive Stoffe), als Komplexbildner (Sequestriermittel, Chelate, Fixiermittel für Schwermetalle) und auf dem Gebiet der Ernährung und der Medizin als hochreines Produkt mit emulgierenden, dispergierenden, antioxidierenden, antibakteriellen, antiviralen und verdauungsregulierenden (antidiarrhoetischen) Eigenschaften zur Verbesserung der energetischen Ausbeute von Nahrungsmitteln eingesetzt werden.

Auf dem industriellen Sektor, insbesondere in Zellstofffabriken, kann das Filtrat nach Abtrennung der Polymere mittels herkömmlicher Wasseraufbereitungssysteme, wie biologischen anaeroben und/oder aeroben Behandlungen und Oxidation in feuchter Phase, aufbereitet werden. Die biologische Behandlung wird insbesondere aufgrund der Verringerung der Beladung mit aromatischen Polymeren, welche als Inhibitoren wirken, erleichtert. Im Fall der feuchten Oxidation trägt das Lignin durch den Gewinn aufgrund seines Verkaufs zur wirtschaftlichen Rentabilität des gesamten Aufbereitungsverfahrens bei. So gestattet die vorliegende Erfindung die Schaffung eines rentablen Systems zur Aufbereitung von industriellen Abwässern.

Ein weiterer bedeutender Vorteil des erfindungsgemäßen Verfahrens besteht in einem viel geringeren Wassergehalt des Polymers nach der Abtrennung, insbesondere nach der Filtration. In den Fällen, in denen eine Abtrennung der Polymere mit bestehenden Methoden möglich ist, liegen die Wassergehalte häufig im Bereich von 75 bis 85 Gew.%. Bei denselben Konzentrationen gestattet die neue Methode eine Wasserreduktion bis zu 50 Gew.%. Dies entspricht einem Faktor zwischen 3 und 5,6 für die zum Trocknen notwendige Energiemenge.

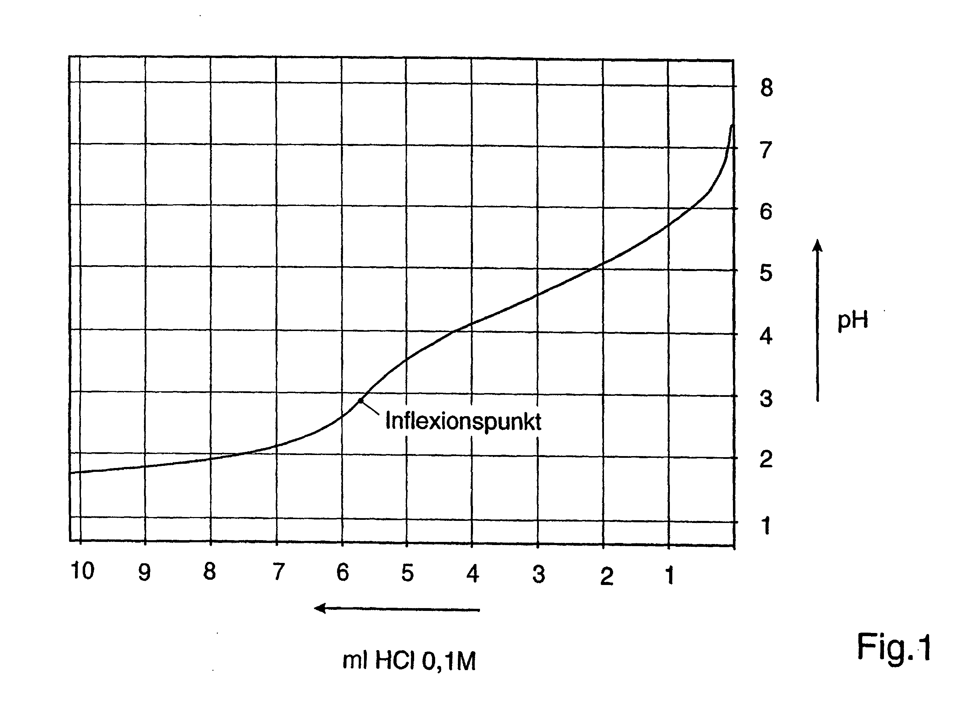

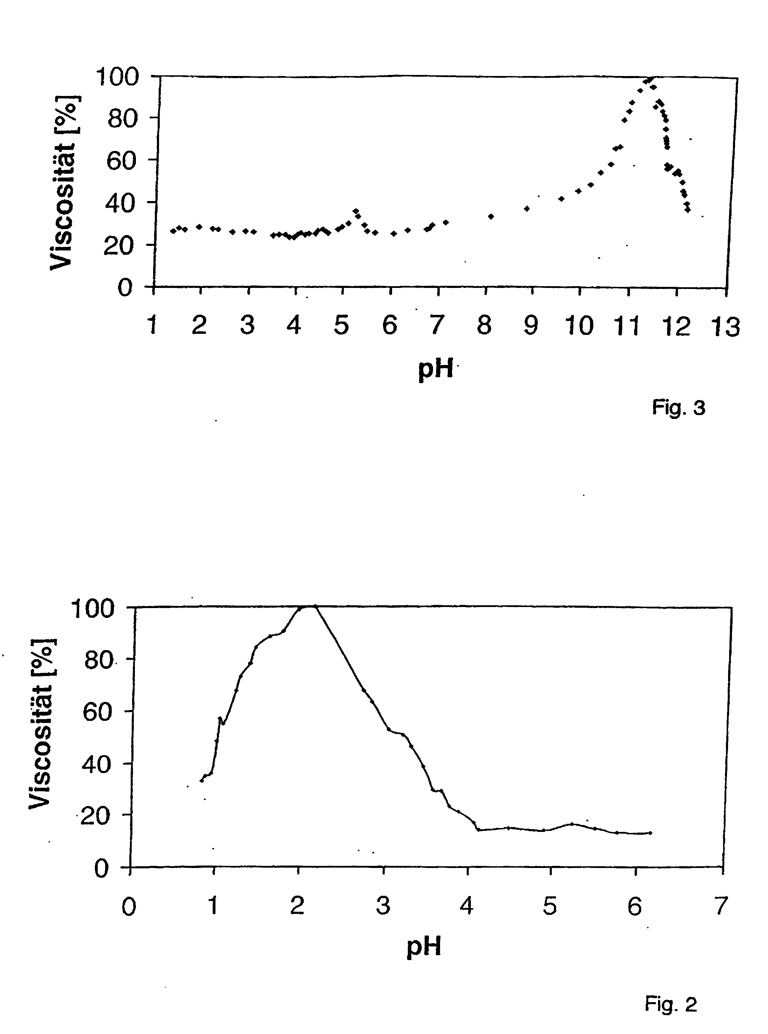

Die Erfindung wird nachfolgend anhand der Zeichnungsfiguren und von Ausführungsbeispielen näher erläutert. In der Zeichnung zeigen Fig.1 eine Titrationskurve für die Schwarzlauge nach Beispiel 1, Fig.2 eine Abhängigkeit der Viskositätswerte vom pH-Wert für die Schwarzlauge nach Beispiel 1 und Fig.3 eine Darstellung entsprechend Fig.2 für die Schwarzlauge nach Beispiel 5.

### Beispiel 1

Schwarzlauge aus Stroh mit einem CSB von 115 g/l und einem Gesamtalkaligehalt ausgedrückt in Natriumhydroxid von 17,4 g/l, einem Inflexionspunkt auf der Titrationskurve bei pH 2,9, wie in Fig.1 dargestellt, sowie einem Maximum auf der Viskositätskurve bei pH 2,1, wie in Fig.2 dargestellt, wird bei einer Temperatur von 85°C mit Schwefelsäure auf pH 1,0 angesäuert. Der daraus resultierende Niederschlag geht durch jegliche Art von Filterpapier.

Die gleiche Lauge wird bei einer Temperatur von 35°C mit Schwefelsäure auf pH 1,0 angesäuert. Der daraus resultierende Niederschlag verstopft fast sofort jede Art von Filterpapier und ist weder durch Sedimentation noch durch Zentrifugation abzutrennen.

Das aus derselben Lauge durch Ausflockung unter Verwendung von Polyelekrolyten und durch Zentrifugation abgetrennte Lignin bekommt ein kohleartiges Aussehen, wenn es an der Luft getrocknet wird und hat einen Aschengehalt von 27,2 %.

200 ml der gleichen Lauge werden bei einer Temperatur von 35°C mit Schwefelsäure auf pH 1,0 angesäuert, auf 85°C erhitzt und 10 min lang unter gleichmäßigem Rühren während des gesamten Prozesses auf dieser Temperatur gehalten. Die Suspension wird danach auf 30°C abgekühlt. Diese Flüssigkeit ist sedimentierbar und läßt sich über ein Büchner-Filter mit 7 cm Durchmesser in einem Zeitraum von 7 min filtrieren. Die Waschung mit 50 ml Wasser dauert 5 min. Der in einem Ofen bei 80°C getrocknete Kuchen hat eine klare gelbe Farbe, einen Aschengehalt von 1 Gew.%, einen Gehalt an Carboxylgruppen von einem Milliäquivalent pro Gramm Trockensubstanz und wiegt 7,9 g. Das Filtrat hat einen CSB von 65,7 g/l.

Werden 200 ml bei 85°C mit 25 ppm eines kationischen Acrylamidflockulierungsmittels versetzt und anschließend bei pH 2,0 ausgefällt, so beträgt die Filtrationszeit 30 min. Wird das Flockulierungsmittel bei 25°C zugegeben und die Ausfällung bei derselben Temperatur und bei pH 2,0 durchgeführt beträgt die Filtrationszeit nach Erhitzen auf 85°C nur 8 min.

### Beispiel 2

200 ml Schwarzlauge aus Papierhanf mit einem CSB von 165 g/l, einem Gesamtalkaligehalt ausgedrückt in Natriumhydroxid von 57,5 g/l, einem Inflexionspunkt auf der Titrationskurve bei pH 6 und einem Maximum auf der Viskositätskurve bei pH 5,5, werden bei einer Temperatur von 65°C mit Schwefelsäure auf pH 5 angesäuert. Diese Flüssigkeit läßt sich in einem Zeitraum von 30 min über ein Büchner-Filter mit 7 cm Durchmesser filtrieren. Die Waschung mit 10 ml Wasser dauert 30 min. Der Kuchen enthält 80 Gew.% Feuchtigkeit. Er wird in zwei Teile geteilt. Der erste wird mehrere Tage lang bei Umgebungstemperatur getrocknet und weist dann eine stark dunkelbraune Farbe auf und wiegt 8,2 g. Der zweite Teil wird in einem Ofen bei 80°C getrocknet und wird vollkommen schwarz und sehr hart und spröde. Er wiegt 7,9 g. Der Aschengehalt der beiden Teile beträgt 1 Gew.%. Waschen mit mehr als 10 ml Wasser ist nicht möglich, da dies zur Blockierung des Filters führt.

200 ml derselben Lauge werden bei einer Temperatur von 35°C mit Schwefelsäure auf pH 5 angesäuert und danach unter gleichmäßigem Rühren während des gesamten Prozesses auf 65°C erhitzt. Diese Flüssigkeit läßt sich über ein Büchner-Filter mit 7 cm Durchmesser in einem Zeitraum von 9 min filtrieren. Die Waschung mit 50 ml Wasser dauert 4 min. Der Kuchen enthält 50 Gew.% Feuchtigkeit. Getrocknet in einem Ofen bei 80°C, hat er eine hellbraune Farbe und einen Aschengehalt von 0,1 Gew.%.

### Beispiel 3

10 g des Produkts aus Beispiel 2 werden in 100 ml Wasser mit 1 g NaOH und 3 g Ethylenoxid gelöst. Die Lösung wird 10 h lang reagieren gelassen. Sie wird danach bei einer Temperatur von 65°C mit Schwefelsäure auf pH 5 angesäuert. Diese Flüssigkeit läßt sich in einem Zeitraum von 2 h über ein Büchner-Filter mit 7 cm Durchmesser filtrieren. Die Waschung mit 50 ml Wasser dauert 1 h. Das resultierende Produkt wird nach dem Trocknen bei Umgebungstemperatur vollkommen schwarz und sehr hart und spröde.

Die gleiche Lösung nach der Umsetzung mit Ethylenoxid wird bei 35°C angesäuert, auf 65°C erhitzt und 10 min lang unter gleichmäßigem Rühren während des gesamten Prozesses auf dieser Temperatur gehalten. Die Suspension wird danach auf 30°C abgekühlt. Diese Flüssigkeit läßt sich in einem Zeitraum von 4 min über ein Büchner-Filter mit 7 cm Durchmesser filtrieren. Die Waschung mit 50 ml Wasser dauert 30 s. Der Kuchen enthält 50 Gew.% Feuchtigkeit. Getrocknet in einem Ofen bei 80°C, hat er eine hellbraune Farbe und einen Aschengehalt von 0,1 Gew.%.

### Beispiel 4

1 1 Abwasser von der Zellstoff-Produktion aus Stroh am Ausgang der biologischen Aufbereitung mit einem CSB von 3 g/l werden bei einer Temperatur von 35°C mit Schwefelsäure auf pH 0,5 angesäuert und danach unter gleichmäßigem Rühren während des gesamten Prozesses auf auf 40°C erhitzt. Die Suspension wird danach 15 min absetzen gelassen und die überstehende Flüssigkeit wird abgetrennt. Sie hat einen CSB von 0,9 g/l. Das resultierende Volumen beträgt 200 ml. Diese Flüssigkeit wird danach auf 65°C erhitzt und nochmals 15 lang absetzen gelassen und dekantiert. Das verbleibende Volumen beträgt dann 50 ml. Es läßt sich über ein Büchner-Filter mit 7 cm Durchmesser innerhalb von 1 min filtrieren. Die Waschung mit 50 ml Wasser dauert 15 s. Der in einem Ofen bei 80°C getrocknete Kuchen hat eine hellbraune Farbe und einen Aschengehalt von 1 Gew.%.

### Beispiel 5

200 ml der Schwarzlauge wie in Beispiel 1 werden mit 3 g Calziumoxid versetzt und während 10 Stunden bei 60°C umgerührt. Diese Flüssigkeit hat zwei Maxima für die Viskosität eines bei pH 11,1 und eines bei pH 5,3, wie in Fig.3 dargestellt. 50 ml dieses Musters werden bei 60°C durch Einblasen von CO₂ bis zu pH 9,0 angesäuert. Die resultierende Flüssigkeit ist unfiltrierbar und wird während 5 Minuten mit 4500 Umdrehungen pro Minute zentrifugiert. Nach der anschließenden Trennung der beiden Phasen liegen 40 g in der sedimentierten Phase und nur 10 g in der flüssigen Phase.

Weitere 50 ml werden unter stetigem Rühren bei 20°C ebenfalls mit CO₂ auf pH 9,0 gebracht und anschließend während 20 Minuten bei 60°C gehalten. Diese Flüssigkeit ergibt bei Zentrifugation ein Verhältnis Sediment zu Flüssigphase von 1 zu 3.

## Patentansprüche

1. Verfahren zur Aufbereitung von durch Ansäuern ausfällbare aromatische Polymere enthaltenden alkalischen Lösungen, welches die Abtrennung dieser Polymere in fester Form und die Trocknung an Luft bei normalem Druck und unter Anwendung von Temperaturen zwischen 40° und 110°C ohne Schwarzwerden gestattet, **dadurch gekennzeichnet, daß** die Lösung angesäuert und danach erhitzt und der resultierende Niederschlag als Feststoff abgetrennt wird.

2. Verfahren nach Anspruch 1 oder 2, **dadurch gekennzeichnet, daß** die auszufällenden Polymere die folgenden Kriterien erfüllen:
a) ein Maximum auf der Viskositätskurve von unter pH 8 oder
b) einen unteren Inflexionspunkt auf der Titrationskurve von unter pH 6,5.

3. Verfahren nach Anspruch 1, **gekennzeichnet durch** eine oder mehrere der folgenden Bedingungen:
a) die Ausfällung erfolgt bei einer Temperatur zwischen 0 und 90°C, vorzugsweise 15 und 60°C;
b) die Ausfällung erfolgt bei einem pH-Wert von 0 bis 3 Einheiten unter dem pH-Wert des Inflexionspunktes der schwach sauren Gruppen der Polymere auf ihrer Titrationskurve,
c) die Temperaturspanne des Wiederaufheizens liegt zwischen 2 und 100°C, vorzugsweise bei 20° bis 50° C;
d) die verwendete Säure ist eine Mineral- oder organische Säure, die in flüssiger Form zugegeben und/oder in gasförmiger Form eingeleitet wird;
e) der aus einer solcher Behandlung der Lösung resultierende Niederschlag wird **durch** ein herkömmliches Verfahren oder eine Kombination von herkömmlichen Verfahren der physikalischen Abtrennung eines unlöslichen Stoffs abgetrennt;
f) im Fall der Filtration wird der im Filter zurückbleibende Kuchen mit Wasser, vorzugsweise mit warmem Wasser zwischen 35 und 100°C, gewaschen;
g) die Ausfällung erfolgt bei einem pH-Wert unter einem Maximum der sich mit variablem pH ändernden Viskosität der Flüssigkeit, jedoch nicht mehr als 3 pH-Werte unter demselben.

4. Verfahren nach Anspruch 1, 2 oder 3, angewendet bei alkalischen Lösungen, nämlich
a) Abwässern von der Zellstoff-Produktion aus natürlichen lignocellulosehaltigen Stoffen,
b) alkalischen Lösungen von bei saurem pH ausfällbaren Ligninen,
c) Lösungen von Polymeren, die ihrerseits von einem Verfahren nach den vorliegenden Ansprüchen stammen und in einem alkalischen Medium durch Zugabe einer Base und/oder von Wasser wiedergelöst werden,
d) alkalischen Lösungen von anderen unter alkalischen Bedingungen löslichen und bei saurem pH ausfällbaren aromatischen Polymeren oder
e) alkalischen Lösungen eines jeden oder mehrerer der obengenannten Polymere in Mischung mit anderen Polymeren oder anderen organischen oder anorganischen Produkten.

5. Verfahren nach Anspruch 4 zur Verwendung für in Lösung befindliche Polymere, welche vor dem Ausfällen oder nach dem Abtrennen und neuerlichen Lösen in alkalischer Lösung chemischen Veränderungen unterzogen werden.

6. Verfahren nach Anspruch 5, **dadurch gekennzeichnet, daß** die chemischen Veränderungen hervorgerufen werden
a) durch Erhöhung, Einführung oder Verringerung von polaren chemischen Gruppen, Sulfonaten, Nitrogruppen, Propfung von organischen oder anorganischen Molekülen mittels Veretherung oder Veresterung; oder
b) durch Änderungen von funktionellen Gruppen in Kombination mit der Verringerung oder Erhöhung des mittleren Molekulargewichts sowie Änderungen in deren Verteilung über die genannten Reaktionen sowie Reaktionen umfassend Oxidationen mittels Sauerstoff, Wasserstoffperoxid, Ozon oder anderen Oxidationsmitteln, Oxoammonolyse, Polymerisationen, elektrochemische oder enzymatische Reaktionen.

7. Verfahren nach einem der Ansprüche 1 bis 6, **gekennzeichnet durch** die zusätzliche Anwendung einer oder mehrerer der folgenden Maßnahmen zur Verbesserung der Filtration:
a) kontinuierliches und gleichmäßiges Rühren während des gesamten Prozesses;
b) Reifung während wenigstens 2 min, vorzugsweise bis 60 min unter Konstanthalten der Temperatur nach dem Wiederaufheizen, gegebenenfalls unter kontinuierlichem und gleichmäßigem Rühren;
c) Abkühlen nach dem Wiederaufheizen unter Verringerung der Temperatur um mindestens 5°C, vorzugsweise mindestens 20°C, und höchstens bis auf 0°C;
d) Anwendung einer Sedimentation und einer Abtrennung der flüssigen Phase vor der Filtration oder Zentrifugation;
e) Verfahren aus Punkt d) unter Ausführen nur eines teilweisen Wiederaufheizens um mindestens 2°C, vorzugsweise zwischen 5 und 20°C, und unter Ausführen eines zweiten Wiederaufheizens nach dem Verfahren der Ansprüche 1 bis 4 am Sediment nach Abtrennung der flüssigen Phase ohne neuerliche Zugabe von Säure;
f) Verfahren aus Punkt e), gefolgt von einer zweiten Sedimentation vor der Filtration oder Zentrifugation.

8. Verfahren nach einem der Ansprüche 1 bis 7, **gekennzeichnet durch** die zusätzliche Anwendung vor der Ausfällung eines oder mehrerer Verfahren zur Verbesserung der Ausfällung und dies
a) direkt an der Mischung oder
b) am Filtrat nach der Abtrennung mit nachfolgend neuerlicher Abtrennung.

9. Verfahren nach einem der Ansprüche 1 bis 8, **gekennzeichnet durch** die Abtrennung von verschiedenen Polymerfraktionen in mehreren Stufen **durch** Absenken des pH-Werts in jeder Stufe auf den bei der gewünschten Fraktion in der Viskositätskurve als Maximum erkennbaren Wert.

10. Verfahren nach einem der Ansprüche 1 bis 9, **gekennzeichnet durch** eine Polymerkonzentration in den Lösungen von unter 10 Gew.%, vorzugsweise zwischen 0,5 und 6 Gew.%, bezogen auf die Trockensubstanz, welche Lösungskonzentration
a) aus einem Herstellungprozeß, dessen Lösung ein Abwasser darstellt,
b) aus einer Verdünnung mit Wasser,
c) aus einer Verdünnung mit einem anderen, verdünnteren Abwasser
stammt.

## Claims

1. A method of preparing alkaline solutions containing aromatic polymers which can be precipitated by acidification, which makes possible the separation of these polymers in solid form and drying in air at normal pressure and employing temperatures of between 40° and 110°C without blackening, **characterised in that** the solution is acidified, then heated and the resultant precipitate is separated as a solid.

2. A method according to Claim 1 or 2, **characterised in that** the polymers to be precipitated meet the following criteria:
a) a maximum on the viscosity curve below pH 8 or
b) a lower inflexion point on the titration curve at less than pH 6.5.

3. A method according to Claim 1, **characterised by** one or more of the following conditions:
a) the precipitation takes place at a temperature of between 0 to 90°C, preferably 15 and 60°C;
b) the precipitation takes place at a pH value of 0 to 3 units below the pH value of the inflexion point of the weakly acidic groups of the polymers on their titration curve,
c) the temperature range of the reheating is between 2 and 100°C, preferably at 20° to 50°C;
d) the acid used is a mineral or organic acid which is added in liquid form and/or is introduced in gaseous form;
e) the precipitate resulting from such treatment of the solution is separated using, a conventional method or a combination of conventional methods of physical separation of an insoluble substance;
f) in the case of filtration, the cake remaining in the filter is washed with water, preferably hot water at between 35 and 100°C;
g) the precipitation takes place at a pH value less than the maximum viscosity of the liquid, which changes with variable pH, but not more than 3 pH values below said value.

4. A method according to Claim 1, 2 or 3, used for alkaline solutions, namely
a) waste water from cellulose production from natural lignocellulose-containing materials,
b) alkaline solutions of lignins which can be precipitated at acid pH,
c) solutions of polymers which, in turn, originate from a method according to the present claims and are dissolved again in an alkaline medium by adding a base and/or water,
d) alkaline solutions of other aromatic polymers which are soluble under alkaline conditions and which can precipitate at acid pH or
e) alkaline solutions of each or several of the above-mentioned polymers mixed witih other polymers or other organic or inorganic products.

5. A method according to Claim 4 to be used for polymers in solution, which are subject to chemical changes before the precipitation or after the separation and renewed dissolution in alkaline solution.

6. A method according to Claim 5, **characterised in that** the chemical changes are caused
a) by increasing, introducing or reducing polar chemical groups, sulphonates, nitrogroups, grafting of organic or inorganic molecules by means of etherification or esterification, or
b) by variations of functional groups in combination with the reduction or increase in the average molecular weight, as well as variations in their distribution over said reactions, as well as reactions comprising oxidation by means of oxygen, hydrogen peroxide, ozone or other oxidants, oxoammonolysis, polymerisations, electrochemical or enzymatic reactions.

7. A method according to any one of Claims 1 to 6, **characterised by** the additional use of one of more of the following measures to improve the filtration:
a) continuous and uniform stirring throughout the entire process;
b) maturation for at least 2 min., preferably up to 60 min. while maintaining the temperature constant after the reheating, optionally with continuous and uniform stirring;
c) cooling after the reheating while reducing the temperature by at least 5°C, preferably at least 20°C, and at maximum to 0°C;
d) use of sedimentation and separation of the liquid phase before the filtration or centrifuging;
e) method from point d) while carrying out only partial reheating by at least 2°C, preferably between 5 and 20°C, and while carrying out a second reheating in accordance with the method of Claims 1 to 4 on the sediment after separation of the liquid phase without renewed addition of acid;
f) method from point e), followed by a second sedimentation before the filtration or centrifuging.

8. A method according to any one of Claims 1 to 7, **characterised by** the additional use, before the precipitation, of one or more methods of improving the precipitation and this
a) directly on the mixture or
b) on the filtrate after the separation with subsequent renewed separation.

9. A method according to any one of Claims 1 to 8, **characterised by** the separation of different polymer fractions in several stages by lowering the pH value in any stage to the value which can be identified as a maximum, at the desired fraction on the viscosity curve.

10. A method according to any one of Claims 1 to 9, **characterised by** a polymer concentration in the solutions of less than 10 % by weight, preferably between 0.5 and 6 % by weight, based on the dry substance, which solution concentration originates
a) from a preparation process, the solution of which represents a waste water,
b) from a dilution with water,
c) from a dilution with another more diluted waste water.

## Revendications

1. Procédé pour le traitement de solutions alcalines contenant des polymères aromatiques précipitables par acidification, qui permet la séparation de ces polymères sous forme solide et le séchage à l'air sous pression normale et en utilisant des températures entre 40°C et 110°C sans noircissement, **caractérisé en ce que** la solution est acidifiée, puis chauffée et le précipité obtenu est séparé sous forme solide.

2. Procédé selon la revendication 1 ou 2, **caractérisé en ce que** les polymères à précipiter remplissent les critères suivants :
a) un maximum sur la courbe de viscosité inférieur à pH 8 ou
b) un point d'inflexion inférieur sur la courbe de titrage inférieur à pH 6,5.

3. Procédé selon la revendication 1, **caractérisé par** une ou plusieurs des conditions suivantes :
a) la précipitation est réalisée à une température entre 0 et 90°C, de préférence entre 15 et 60°C ;
b) la précipitation est réalisée à un pH de 0 à 3 unités sous le pH du point d'inflexion des groupes faiblement acides du polymère sur leur courbe de titrage ;
c) la fourchette de température du réchauffage est comprise entre 2 et 100°C, de préférence de 20 à 50°C ;
d) l'acide utilisé est un acide minéral ou organique, qui est ajouté sous forme liquide et/ou introduit sous forme gazeuse ;
e) le précipité obtenu par un tel traitement de la solution est séparé par un procédé usuel ou une combinaison de procédés usuels de séparation physique d'une substance insoluble ;
f) dans le cas de la filtration, le gâteau restant sur le filtre est lavé avec de l'eau, de préférence avec de l'eau chaude entre 35 et 100°C ;
g) la précipitation est réalisée à un pH inférieur au maximum de la viscosité variable en fonction de pH du liquide, mais pas à plus de 3 unités de pH inférieures à celui-ci.

4. Procédé selon la revendication 1, 2 ou 3, appliqué à des solutions alcalines, à savoir :
a) des eaux usées de la production de cellulose à partir de substances naturelles contenant de la lignine et de la cellulose,
b) des solutions alcalines de lignines précipitables à un pH acide,
c) des solutions de polymères qui proviennent à leur tour d'un procédé selon les revendications précédentes et qui sont redissoutes dans un milieu alcalin par addition d'une base et/ou d'eau,
d) des solutions alcalines d'autres polymères aromatiques solubles sous des conditions alcalines et précipitables à un pH acide ou
e) des solutions alcalines d'un ou de plusieurs des polymères susmentionnés en mélange avec d'autres polymères ou d'autres produits organiques ou inorganiques.

5. Procédé selon la revendication 4 utilisé pour des polymères se trouvant en solution, qui ont été soumis à des modifications chimiques avant la précipitation ou après la séparation et une nouvelle dissolution dans une solution alcaline.

6. Procédé selon la revendication 5, **caractérisé en ce que** les modifications chimiques sont provoquées
a) par augmentation, introduction ou diminution de groupes chimiques polaires, de sulfonates, de groupes nitro, par greffage de molécules organiques ou inorganiques par éthérification ou estérification ; ou
b) par des modifications des groupes fonctionnels en combinaison avec la diminution ou l'augmentation du poids moléculaire moyen ainsi que des modifications dans leur répartition via les réactions mentionnées ainsi que des réactions comprenant des oxydations avec de l'oxygène, du peroxyde d'hydrogène, de l'ozone ou d'autres oxydants, l'oxoammonolyse, des polymérisations, des réactions électrochimiques ou enzymatiques.

7. Procédé selon l'une quelconque des revendications 1 à 6, **caractérisé par** l'utilisation supplémentaire d'une ou plusieurs des mesures suivantes pour améliorer la filtration :
a) agitation continue et régulière pendant tout le procédé,
b) maturation pendant au moins 2 minutes, de préférence jusqu'à 60 minutes, sous maintien constant de la température après le réchauffage, le cas échéant sous agitation continue et régulière,
c) refroidissement après le réchauffage en diminuant la température d'au moins 5°C, de préférence d'au moins 20°C et au maximum à 0°C.
d) utilisation d'une sédimentation et d'une séparation de la phase liquide avant la filtration ou la centrifugation,
e) procédé du point d) en ne réalisant qu'un réchauffage partiel à au moins 2°C, de préférence entre 5 et 20°C et en réalisant un deuxième réchauffage selon le procédé des revendications 1 à 4 sur le sédiment après séparation de la phase liquide sans nouvelle addition d'acide,
f) procédé du point e), suivi d'une deuxième sédimentation avant la filtration et la sédimentation.

8. Procédé selon l'une quelconque des revendications 1 à 7, **caractérisé par** l'utilisation supplémentaire avant la précipitation d'un ou de plusieurs procédés pour améliorer la précipitation et ceci
a) directement sur le mélange ou
b) sur le filtrat après la séparation avec une nouvelle séparation consécutive.

9. Procédé selon l'une quelconque des revendications 1 à 8, **caractérisé par** la séparation de différentes fractions polymères en plusieurs étapes par abaissement du pH dans chaque étape à la valeur maximale indiquée dans la courbe de viscosité pour la fraction souhaitée.

10. Procédé selon l'une quelconque des revendications 1 à 9, **caractérisé par** une concentration en polymère dans les solutions inférieures à 10% en poids, de préférence entre 0,5 et 6% en poids par rapport à la substance sèche, cette concentration de la solution provenant
a) d'un procédé de préparation dont la solution représente une eau usée
b) d'une dilution avec de l'eau
c) d'une dilution avec une autre eau usée, plus diluée.
